# EUROPEAN PATENT SPECIFICATION

(11) **EP 3 286 884 B1**
(45) Date of publication and mention of the grant of the patent: **02.12.2020**
(21) Application number: 16898794.9
(22) Date of filing: 12.04.2016
(51) Int. Cl.: H04L 12/46, H04L 12/721

(54) **SERVICE FUNCTION CHAINING BASED ON MAC ADDRESSES**
DIENSTFUNKTIONSVERKETTUNG AUF BASIS VON MAC-ADRESSEN
CHAÎNAGE DE FONCTIONS DE SERVICE BASÉ SUR DES ADRESSES MAC

(43) Date of publication of application: 28.02.2018
(73) Proprietor: Hewlett Packard Enterprise Development LP, Houston, TX 77070 (US)
(72) Inventor: TANDEL, Sebastien, 90619900 Porto Alegre (BR); VACARO, Juliano, 90619900 Porto Alegre (BR); EICHELBERGER, Rafael, 90619900 Porto Alegre (BR)
(74) Representative: Haseltine Lake Kempner LLP
(86) International application number: PCT/US2016/027047
(87) International publication number: WO 2017/180098

(56) References cited:
- WO-A1-2014/169251
- WO-A1-2016/041606
- US-A1- 2013 107 713
- US-A1- 2015 124 815
- US-A1- 2015 195 197
- US-A1- 2015 319 089
- BOTTORFF D FEDYK HP ENTERPRISE H ASSARPOUR BROADCOM P: "Ethernet MAC Chaining; draft-fedyk-sfc-mac-chain-01.txt", ETHERNET MAC CHAINING; DRAFT-FEDYK-SFC-MAC-CHAIN-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 January 2016 (2016-01-20), pages 1-23, XP015110750, [retrieved on 2016-01-20]
- QUINN P ET AL: "Network Service Header; draft-ietf-sfc-nsh-04.txt", NETWORK SERVICE HEADER; DRAFT-IETF-SFC-NSH-04.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 21 March 2016 (2016-03-21), pages 1-43, XP015124345, [retrieved on 2016-03-21]

## Description

### BACKGROUND

A computing device may transmit packets via a network. The network packet may comprise source and destination media access control (MAC) addresses. Relevant prior art documents are "BOTTORFF D FEDYK HP ENTERPRISE H ASSARPOUR BROADCOM P: "ETHERNET MAC CHAINING"; DRAFT-FEDYK-SFC-MAC-CHAIN-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 January 2016 (2016-01-20)" and "QUINN P ET AL: "NETWORK SERVICE HEADER; DRAFT-IETF-SFC-NSH-04.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 21 March 2016 (2016-03-21)".

### BRIEF DESCRIPTION OF THE DRAWINGS

Certain examples are described in the following detailed description and in reference to the drawings, in which:
FIG. 1 is a conceptual diagram of an example computing device that may perform service function chaining;
FIG. 2 is another conceptual diagram of an example computing system that may perform service function chaining;
FIG. 3 is a flowchart of an example method for performing service function chaining;
FIG. 4 is a flowchart of an example method for performing service function chaining; and
FIG. 5 is a block diagram of an example for performing service function chaining.
FIG. 6 is a block diagram of an example for performing service function chaining.

### DETAILED DESCRIPTION

Service function chaining (SFC) is an increasingly popular method of providing network services. Service function chaining routes packets through multiple service functions. As an example, a service function chain may comprise a firewall service and an intrusion protection service (IPS). In this example, a packet that is part of the service function chain may be routed first to the firewall and then to the IPS.

One way of enabling service function chaining is using MAC (media access control) chaining. In MAC address chaining, a MAC-chaining
compatible network device (e.g. a switch, router, or network appliance) determines that a packet is part of a service function chain. The network device then modifies the source and destination MAC addresses of the packet such that the packet is transmitted to a particular service function, the destination address of which is specified by the modified destination address. After a service function is performed on the packet, a switch or router modifies the destination MAC address of the packet such that the packet is transmitted to a subsequent function in the service function chain. MAC chaining-compatible network devices repeatedly modify the MAC addresses of the packet until the packet has traversed each service function of the chain. The packet is then transmitted to a source network device that originated the packet.

For campus environments (i.e. network environments in which heterogeneous network devices are present, a level 3 (L3) gateway may restore the destination MAC address of the packet once the packet has traversed each service of the chain. Requiring an L3 gateway is unsuitable for such campus environments. Additionally, MAC chaining may utilize significant memory overhead from network switching/routing devices.

The techniques of this disclosure enable MAC chaining while also preserving the destination MAC address. The techniques of this disclosure store SFC information in a portion of the source MAC address. Additionally, a compatible network device that implements the techniques of this disclosure stores a tunnel ID (identifier), an SFC ID, an index of a next service function to which the packet will be transmitted, and an action for the packet, in the source MAC address of the packet.

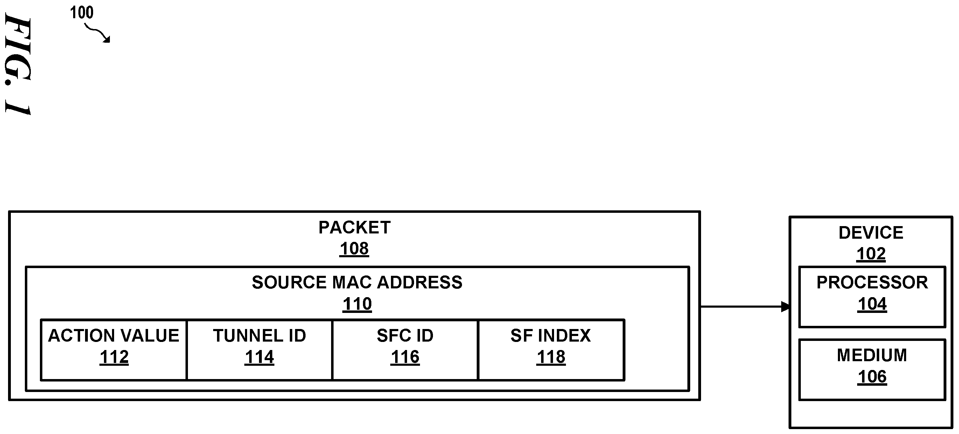

FIG. 1 is a conceptual diagram of an example computing system that may perform service function chaining. Computing system 100 is illustrated in FIG. 1. Computing system 100 comprises a device 102, which may comprise a switch, router, bridge router (BRouter), software defined network device, networking appliance, or the like. Device 102 comprises a processor 104 and a non-transitory medium containing instructions stored thereon that, when executed, cause the processor to perform certain functionality.

Processor 104 may comprise a central processing unit (CPU), graphics processing unit (GPU), application specific integrated circuit (ASIC), digital signal processor (DSP), field programmable gate array (FPGA) or the like. Processor 104 may comprise any combination of the aforementioned. Processor 104 may also comprise one or more virtual devices, such as virtual processors of one or more virtual machines. Medium 106 may comprise software, firmware, non-volatile memory, or the like. Medium 106 may also be any combination of the aforementioned types of media. Processor 104 executes the instructions on medium 106.

Processor 104 receives a packet 108 e.g. via a network interface of device 102. In some examples, the network interface may comprise one or more virtual network interfaces. Packet 108 comprises source MAC address 110. Source MAC address 110 may comprise a MAC address in accordance with the Institute of Electrical and Electronics Engineers (IEEE) 802 format. In various examples, source MAC address 110 may be a 48-bit field of packet 108.

In the example of FIG. 1, source MAC address 110 may comprise an action value 112, an SFC identifier (ID) 114, service function index ("SF Index") 116, and a tunnel identifier 118. Action value 112 may indicate an action for packet 108. As examples, action value 112 may indicate that packet 108 should stop being processed by the service function chain. In some examples, action value 112 may indicate a block flow, block device, a rate limit, or another action that should be performed on packet 108.

SFC ID 114 identifies a particular service function chain that is associated with packet 108. An SFC comprises one or more service functions that network device(s) apply to packet 108. As an example, a service function chain may comprise a firewall service function followed by an intrusion prevention system service function.

SF index 118 corresponds to an index of a particular service function of the service function chain indicated by the value of SFC ID 116. For example, SF index 118 may indicate that a particular service that is to be performed, or has been performed on packet 108.

Tunnel ID 114 indicates a particular tunnel that is associated with packet 108. The tunnel ID indicates a particular tunnel through which packet 108 entered the SFC. Responsive to packet 108 completing the associated SFC, a device, such as device 102 may use tunnel ID 114 to determine a source network device. Device 102 may transmit packet 108 to the determined source network device. In various examples, Action Value 112, Tunnel ID 114, SFC ID 116, and SF index 118 may comprise fields of bits of source MAC address 110. The sizes of the bit fields of Action Value 112, Tunnel ID 114, SFC ID 116, and SF index 118 may be variable to accommodate different SFC configurations.

Device 102 stores Action Value 112, Tunnel ID 114, SFC ID 116, and SF index 118 in source MAC address 110 to perform service function chaining. By storing the aforementioned fields in source MAC address 110, device 102 may be able to determine the service function chain associated with packet 108, the current service function in the service function chain, and an action (if any) to perform on packet 108. Responsive to traversing the service functions of the service function chain, device 102 may also be able to determine and transmit packet 108 to a source network device associated with packet 108.

By storing SFC data in the source MAC address as described herein, the techniques of this disclosure allow to enable compatibility with campus environments, L3 gateway traversal, and transparency with legacy appliance middleboxes, which do not support MAC address chaining. Additionally, the variable numbers of bits that may be assigned to the various SFC-related fields in the source MAC address allow the SFC techniques of this disclosure to scale to hundreds or thousands of Service Chains on a single SFF, and to support hundreds of service functions per chain. Additionally, the action field supports out of band signaling from service functions, such as block flow and/or device signaling.

Thus, in accordance with examples of this disclosure, device 102 comprises a medium 106 storing instructions thereon. The instructions, when executed, cause processor 106 to: receive packet 108 comprising source MAC address 110, determine based on a first field of bits of source MAC address 110, a service function chain identifier 116 corresponding to a service function chain for packet 108.

The instructions further cause processor 106 to: determine, based on a second field of bits of source MAC address 110, a service function index (e.g. service function index 118) corresponding to a service function for the packet, determine, based on a third field of bits of the source MAC address, a tunnel identifier (e.g. tunnel identifier 114) corresponding to a tunnel for the packet, and determine, based on a fourth field of bits of the source MAC address, an action value (e.g. action value 112) for packet 108.

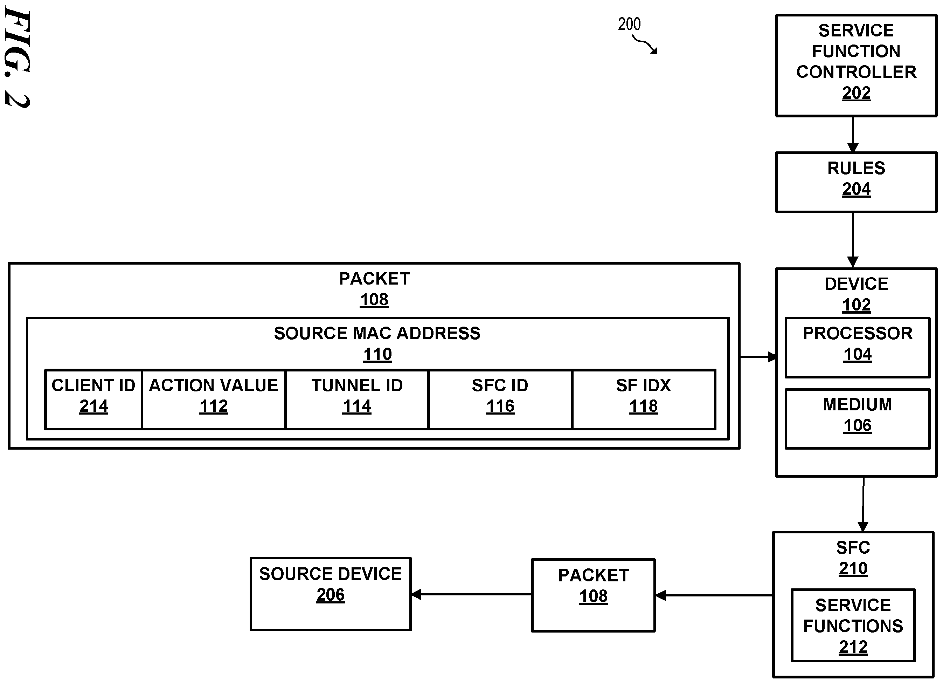

FIG. 2 is another conceptual diagram of an example computing system that may perform service function chaining. FIG. 2 illustrates a computing system 200. Computing system 200 comprises a device 102, and packet 108 as in FIG. 1. Additionally, computing system 200 comprises service function controller 202, rules 204, service function chain 210, service functions 212, and source device 214.

Service function controller 202 may comprise a software-defined networking (SDN) controller in various examples. Service function controller 202 may define service function chains and corresponding identifiers, service functions of service function chains, and tunnel identifiers of service function chains. Service function controller 202 may also define possible action values within a service function chain. In various examples, service function controller 202 may support various communication protocols, such as OpenFlow. Service function controller 202 may generate rules 204. Based on rules 204, device 102 may determine action value 112, service function chain ID 114, service function index 116, and tunnel ID 118.

In the example of FIG. 2, device 102 transmits packet 108 through SFC 210 comprising service functions 212. As described above, an example SFC may comprise a firewall service function and an IPS service functions. Each of service functions 212 may comprise a different service that one or more network devices may perform. For example, a network device or network devices may perform the firewall service function. The same or different network device or devices may perform the IPS service function.

In various examples, device 102 may transmit packet 108 to one of service functions 212 based on SF index 116. In various examples, device 102 may modify fields of source MAC address 110 responsive to packet 108 completing one of service functions 212 of SFC 210. As an example, device 102 may modify the value of SF index 116 to indicate that packet 108 is to perform a subsequent one of service functions 212. In some examples, device 102 may increment the value of SF index 116 responsive to packet 108 completing one of service functions 212. Responsive to modifying the value of SF index 116, device 102 may transmit packet 108.

Responsive to packet 108 traversing service functions 212 of SFC 210, device 102 may receive packet 108, and perform additional operations on packet 108. In some examples, device 102 may transmit packet 108 to a source network device indicated by tunnel ID 118, e.g. source device 206. Source device 206 may comprise a switch, router, or any other network device as described herein, which originated packet 108.

In various examples, device 102 may also store a client ID 214 in packet 108. Client ID 214 may identify a device that originally sent packet 218. Responsive to receiving packet 108, device 102 may store source MAC address 110, e.g. in a lookup table based on client ID 214 that device 102 associates with each stored MAC address. In this manner, when packet 108 completes traversal of services of a service function chain (e.g., service functions 212 of SFC 210), device 102 may restore the original source MAC address based on the association between client ID 214 stored in packet 108 and the corresponding source MAC address.

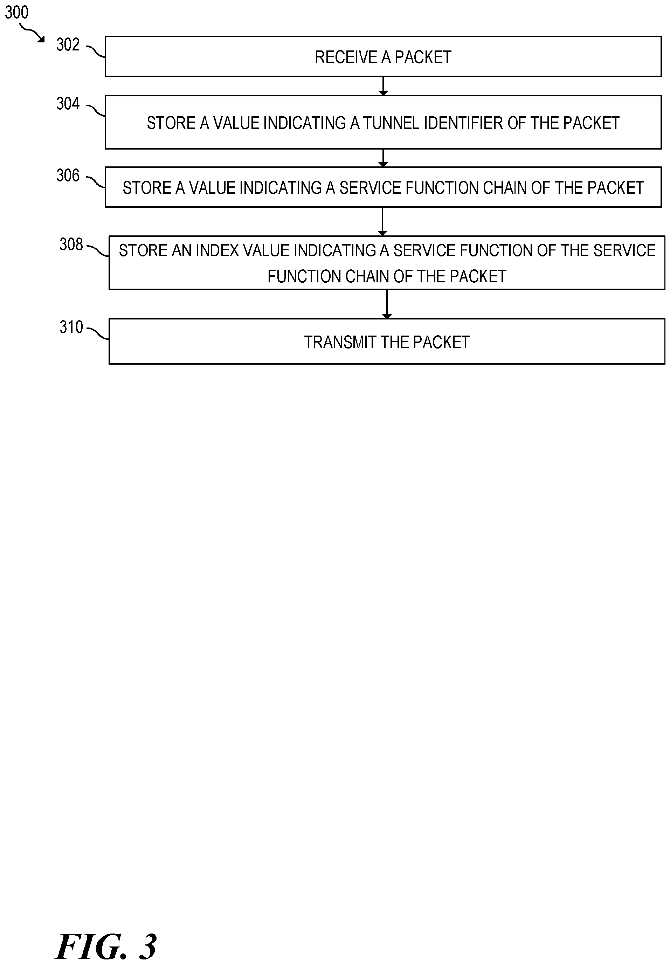

FIG. 3 is a flowchart of an example method for performing service function chaining. FIG. 3 comprises method 300. Method 300 may be described below as being executed or performed by a system, for example, computing system 100 (FIG. 1), or computing system 200 (FIG. 2). In various examples, method 300 may be performed by hardware, software, firmware, or any combination thereof. Other suitable systems and/or computing devices may be used as well. Method 300 may be implemented in the form of executable instructions stored on at least one machine-readable storage medium of the system and executed by at least one processor of the system. In various examples, the machine-readable storage medium is non-transitory. Alternatively or in addition, method 300 may be implemented in the form of electronic circuitry (e.g., hardware). In alternate examples of the present disclosure, one or more blocks of method 300 may be executed substantially concurrently or in a different order than shown in FIG. 3. In alternate examples of the present disclosure, method 300 may include more or fewer blocks than are shown in FIG. 3. In some examples, one or more of the blocks of method 300 may, at certain times, be ongoing and/or may repeat.

Method 300 may start at block 302 at which point a computing device, such as device 102 may receive a packet, e.g. packet 108. At block 304, device 102 may store, in a source MAC address of the packet (e.g. source MAC address 110), a value indicating a tunnel identifier of the packet, e.g. tunnel ID 114. In some examples, the tunnel identifier may indicate source device associated with the packet, e.g. source device 206.

At block 306, device 102 may store, in the source MAC address, a value indicating a service function chain of the packet, e.g. SFC ID 116, which may indicate that packet 108 is associated with SFC 210. At block 308, device 102 may store in the source MAC address, an index value (e.g. SF IDX 118) indicating a service function of the service function chain of the packet. SF IDX 118 may indicate one of service functions 212 in various examples. At block 310, device 102 may transmit the packet, i.e. packet 108.

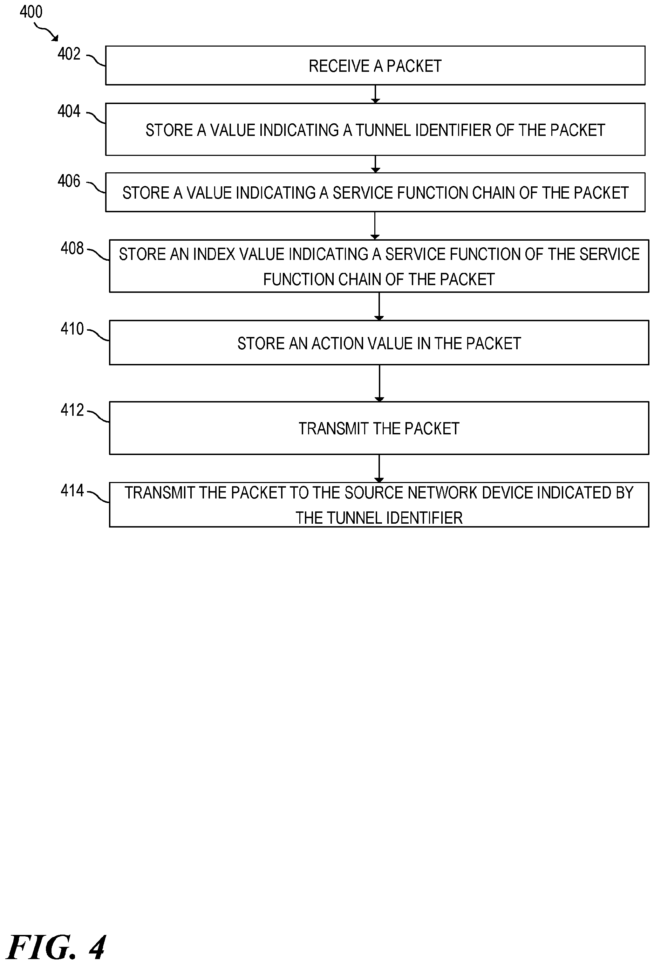

FIG. 4 is a flowchart of an example method for performing service function chaining. FIG. 4 comprises method 400. Method 400 may begin at block 402. At block 402, a computing device, device 102, may receive a packet, e.g. packet 108. At block 404, device 102 may store, in a source MAC address of the packet (e.g. source MAC address 110), a value indicating a tunnel identifier of the packet, e.g. tunnel ID 114. In some examples, the tunnel identifier may indicate a source device associated with the packet, e.g. source device 206.

At block 406, device 102 may store, in the source MAC address, a value indicating a service function chain of the packet, e.g. SFC ID 116, which may indicate that packet 108 is associated with SFC 210 (illustrated in FIG. 2). At block 408, device 102 may store in the source MAC address, an index value (e.g. SF IDX 118) indicating a service function of the service function chain of the packet. SF IDX 118 may indicate one of service functions 212 in various examples. In some examples, storing the index value indicating the service function may comprise incrementing the value indicating the service function. In various examples, the value indicating the service function chain and the index value indicating the service function may be based on rules received from a service function controller (SFC).

At block 410, device 102 may store, in the source MAC address, a value (e.g. action value 112) indicating an action for the packet. In various examples, the value indicating the tunnel identifier may comprise a first field of bits of the source MAC address, the value indicating service function chain comprises a second field of bits of the source MAC address, the index value indicating the service function may comprise a third set of bits, and the value indicating the action for the packet may comprise a fourth set of bits.

At block 412, device 102 may transmit the packet, i.e. packet 108. In some examples packet 108 may traverse service functions 212 of SFC 210. At block 414, responsive to responsive to the packet completing the service function chain, device 102 may transmit the packet (e.g. packet 108) to the source network device indicated by the tunnel identifier, e.g. source device 206.

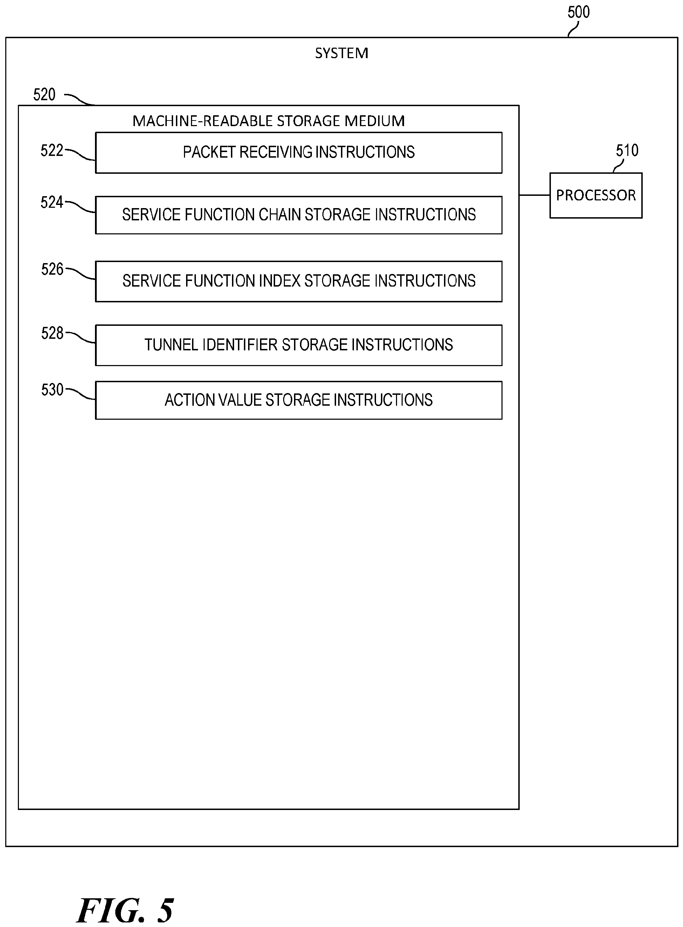

FIG. 5 is a block diagram of an example for performing service function chaining. In the example of FIG. 5, system 500 includes a processor 510 and a machine-readable storage medium 520. Although the following descriptions refer to a single processor and a single machine-readable storage medium, the descriptions may also apply to a system with multiple processors and multiple machine-readable storage mediums. In such examples, the instructions may be distributed (e.g., stored) across multiple machine-readable storage mediums and the instructions may be distributed (e.g., executed by) across multiple processors.

Processor 510 may be one or more central processing units (CPUs), microprocessors, and/or other hardware devices suitable for retrieval and execution of instructions stored in machine-readable storage medium 520. In the particular example shown in FIG. 5, processor 510 may fetch, decode, and execute instructions 522, 524, 525, 528, 530 to perform service function chaining.

As an alternative or in addition to retrieving and executing instructions, processor 510 may include one or more electronic circuits comprising a number of electronic components for performing the functionality of one or more of the instructions in machine-readable storage medium 520. With respect to the executable instruction representations (e.g., boxes) described and shown herein, it should be understood that part or all of the executable instructions and/or electronic circuits included within one box may, in alternate examples, be included in a different box shown in the figures or in a different box not shown.

Machine-readable storage medium 520 may be any electronic, magnetic, optical, or other physical storage device that stores executable instructions. Thus, machine-readable storage medium 520 may be, for example, Random Access Memory (RAM), an Electrically-Erasable Programmable Read-Only Memory (EEPROM), non-volatile memory, a storage drive, an optical disc, and the like. Machine-readable storage medium 520 may be disposed within system 500, as shown in FIG. 5. Machine-readable medium 520 is non-transitory in various examples. In this situation, the executable instructions may be "installed" on the system 500. Alternatively, machine-readable storage medium 520 may be a portable, external or remote storage medium, for example, that allows system 500 to download the instructions from the portable/external/remote storage medium.

Referring to FIG. 5, packet receiving instructions 522, when executed by a processor, e.g. processor 510, may cause processor 510 to receive a packet. Service function chain storage instructions 524, when executed, may cause processor 510 to store, in a first bit field of the source MAC address, a service function chain identifier corresponding to the service function chain of the packet.

Service function index storage instructions 526, when executed, may cause processor 510 to store, in a second bit field of the source MAC address, a service function index that corresponds to a service function of the service function chain. Tunnel identifier storage instructions 528, when executed, may cause processor 510 to store, in a third bit field of the source MAC address, a tunnel identifier, wherein the tunnel identifier corresponds to a source network device associated with the packet. Action value storage instructions 530, when executed, may cause processor 510 to store, in a fourth bit field of the source MAC address, an action value (e.g. action value 112), wherein the action value indicates an action for the packet.

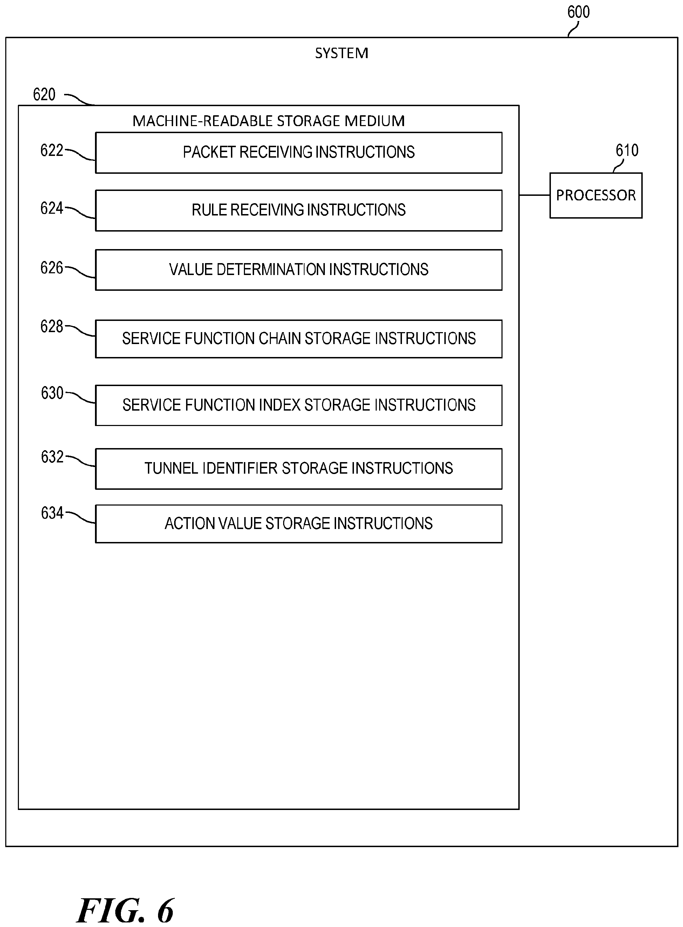

FIG. 6 is a block diagram of an example for performing service function chaining. In the example of FIG. 6, system 600 includes a processor 610 and a machine-readable storage medium 620. Although the following descriptions refer to a single processor and a single machine-readable storage medium, the descriptions may also apply to a system with multiple processors and multiple machine-readable storage mediums. In such examples, the instructions may be distributed (e.g., stored) across multiple machine-readable storage mediums and the instructions may be distributed (e.g., executed by) across multiple processors.

Processor 610 may be one or more central processing units (CPUs), microprocessors, and/or other hardware devices suitable for retrieval and execution of instructions stored in machine-readable storage medium 620. In the particular example shown in FIG. 6, processor 610 may fetch, decode, and execute instructions 622, 624, 626, 628, 630, 632, 634 to perform service function chaining.

As an alternative or in addition to retrieving and executing instructions, processor 610 may include one or more electronic circuits comprising a number of electronic components for performing the functionality of one or more of the instructions in machine-readable storage medium 620. With respect to the executable instruction representations (e.g., boxes) described and shown herein, it should be understood that part or all of the executable instructions and/or electronic circuits included within one box may, in alternate examples, be included in a different box shown in the figures or in a different box not shown.

Machine-readable storage medium 620 may be any electronic, magnetic, optical, or other physical storage device that stores executable instructions. Thus, machine-readable storage medium 620 may be, for example, Random Access Memory (RAM), an Electrically-Erasable Programmable Read-Only Memory (EEPROM), non-volatile memory, a storage drive, an optical disc, and the like. Machine-readable storage medium 620 may be disposed within system 600, as shown in FIG. 6. Machine-readable medium 620 is non-transitory in various examples. In this situation, the executable instructions may be "installed" on the system 600. Alternatively, machine-readable storage medium 620 may be a portable, external or remote storage medium, for example, that allows system 600 to download the instructions from the portable/external/remote storage medium.

Referring to FIG. 6, packet receiving instructions 622, when executed by a processor, e.g. processor 610, may cause processor 610 to receive a packet. Rule receiving instructions 624, when executed, may cause processor 610 to receive rules for determining a tunnel identifier, a service function chain, a service function, and an action of the packet (e.g. packet 108 of FIG. 1). Value determination instructions 626, when executed, may cause processor 610 to determine the action value, the service function chain identifier, the service function index, and the tunnel identifier based on the received rules.

Service function chain storage instructions 628, when executed, may cause processor 610 to store, in a first bit field of the source MAC address, a service function chain identifier corresponding to the service function chain of the packet. Service function index storage instructions 630, when executed, may cause processor 610 to store, in a second bit field of the source MAC address, a service function index that corresponds to a service function of the service function chain. Tunnel identifier storage instructions 632, when executed, may cause processor 610 to store, in a third bit field of the source MAC address, a tunnel identifier, wherein the tunnel identifier corresponds to a source network device associated with the packet. Action value storage instructions 634, when executed, may cause processor 610 to store, in a fourth bit field of the source MAC address, an action value (e.g. action value 112), wherein the action value indicates an action for the packet.

## Claims

1. A method (300, 400) for performing service function chaining by a device (102) or system (500, 600), the method comprising the steps of:
receiving (302, 402) a packet (108), wherein the packet comprises a source media access control, MAC, address (110);
storing (304, 404), in a first field of bits of the source MAC address (110) of the packet (108), a first value (114) indicating a tunnel identifier of the packet (108), wherein the tunnel identifier (114) indicates a source device (206) associated with the packet (108);
storing (306, 406), in a second field of bits of the source MAC address (110), a second value (116) indicating a service function chain (210) of the packet (108);
storing (308, 408), in a third field of bits of the source MAC address (110), an index value (118) indicating a service function (212) of the service function chain (210) of the packet (108), wherein the service function chain (210) is indicated by the stored second value (116);
storing (410), in a fourth field of bits of the source MAC address (110), an action value (112) indicating an action for the packet (108); and
transmitting (310, 412, 414) the packet (108) to the source device (206) indicated by the tunnel identifier (114), responsive to the packet (108) completing the service function chain (210).

2. The method of claim 1, wherein the value (116) indicating the service function chain (210) and the index value (118) indicating the service function (212) are based on rules (204) received from a service function controller, SFC (202).

3. The method of claim 1, wherein storing (308, 408) the index value (118) indicating the service function (212) comprises incrementing the value indicating the service function (212).

4. A device (102, 600) for performing service function chaining, the device (102, 600) comprising a processor (104, 510, 610) configured to carry out all the steps of method according to any one of claims 1 to 3.

5. A non-transitory machine-readable storage medium (106, 520, 620) comprising instructions which, when executed by a processor (104, 510, 610), cause the processor (104, 510, 610) to carry out all the steps of the method according to any one of claims 1 to 3.

## Patentansprüche

1. Verfahren (300, 400) zum Durchführen einer Verkettung von Dienstfunktionen durch eine Vorrichtung (102) oder ein System (500, 600), wobei das Verfahren die folgenden Schritte umfasst:
Empfangen (302, 402) eines Pakets (108), wobei das Paket eine Quell-Medienzugriffssteuerungs(*Media Access Control* - MAC)-Adresse (110) umfasst;
Speichern (304, 404), in einem ersten Feld von Bits der Quell-MAC-Adresse (110) des Pakets (108), eines ersten Werts (114), der einen Tunnelbezeichner des Pakets (108) angibt, wobei der Tunnelbezeichner (114) eine dem Paket (108) zugeordnete Quellvorrichtung (206) angibt;
Speichern (306, 406), in einem zweiten Feld von Bits der Quell-MAC-Adresse (110), eines zweiten Werts (116), der eine Dienstfunktionskette (210) des Pakets (108) angibt;
Speichern (308, 408), in einem dritten Feld von Bits der Quell-MAC-Adresse (110), eines Indexwerts (118), der eine Dienstfunktion (212) der Dienstfunktionskette (210) des Pakets (108) angibt, wobei die Dienstfunktionskette (210) durch den gespeicherten zweiten Wert (116) angegeben wird;
Speichern (410), in einem vierten Feld von Bits der Quell-MAC-Adresse (110), eines Aktionswerts (112), der eine Aktion für das Paket (108) angibt; und
Übertragen (310, 412, 414) des Pakets (108) an die Quellvorrichtung (206), die durch den Tunnelbezeichner (114) angegeben ist, als Reaktion auf das Paket (108), das die Dienstfunktionskette (210) vervollständigt.

2. Verfahren nach Anspruch 1, wobei der Wert (116), der die Dienstfunktionskette (210) angibt, und der Indexwert (118), der die Dienstfunktion (212) angibt, auf Regeln (204) basieren, die von einer Dienstfunktionssteuerung (*Service Function Controller-* SFC) (202) empfangen werden.

3. Verfahren nach Anspruch 1, wobei das Speichern (308, 408) des Indexwerts (118), der die Dienstfunktion (212) angibt, ein Inkrementieren des Werts, der die Dienstfunktion (212) angibt, umfasst.

4. Vorrichtung (102, 600) zum Durchführen einer Verkettung von Dienstfunktionen, wobei die Vorrichtung (102, 600) einen Prozessor (104, 510, 610) umfasst, der konfiguriert ist, alle Schritte eines Verfahrens nach einem der Ansprüche 1 bis 3 vorzunehmen.

5. Nicht flüchtiges maschinenlesbares Speichermedium (106, 520, 620), das Anweisungen umfasst, die, wenn sie durch einen Prozessor (104, 510, 610) ausgeführt werden, den Prozessor (104, 510, 610) veranlassen, alle Schritte des Verfahrens nach einem der Ansprüche 1 bis 3 vorzunehmen.

## Revendications

1. Procédé (300, 400) pour effectuer un chaînage de fonctions de service par un dispositif (102) ou un système (500, 600), le procédé comprenant les étapes consistant à :
recevoir (302, 402) un paquet (108), dans lequel le paquet comprend une adresse de commande d'accès au support source, MAC, (110) ;
stocker (304, 404), dans un premier champ de bits de l'adresse MAC source (110) du paquet (108), une première valeur (114) indiquant un identifiant de tunnel du paquet (108), dans lequel l'identifiant de tunnel (114) indique un dispositif source (206) associé au paquet (108) ;
stocker (306, 406), dans un deuxième champ de bits de l'adresse MAC source (110), une seconde valeur (116) indiquant une chaîne de fonctions de service (210) du paquet (108) ;
stocker (308, 408), dans un troisième champ de bits de l'adresse MAC source (110), une valeur indice (118) indiquant une fonction de service (212) de la chaîne de fonctions de service (210) du paquet (108), dans lequel la chaîne de fonctions de service (210) est indiquée par la seconde valeur stockée (116) ;
stocker (410), dans un quatrième champ de bits de l'adresse MAC source (110), une valeur d'action (112) indiquant une action pour le paquet (108) ; et
transmettre (310, 412, 414) le paquet (108) au dispositif source (206) indiqué par l'identifiant de tunnel (114), en réponse à la complétion de la chaîne de fonctions de service (210) par le paquet (108).

2. Procédé selon la revendication 1, dans lequel la valeur (116) indiquant la chaîne de fonctions de service (210) et la valeur indice (118) indiquant la fonction de service (212) sont basées sur des règles (204) reçues d'un dispositif de commande de fonctions de service, SFC (202).

3. Procédé selon la revendication 1, dans lequel le stockage (308, 408) de la valeur indice (118) indiquant la fonction de service (212) comprend l'incrémentation de la valeur indiquant la fonction de service (212).

4. Dispositif (102, 600) pour effectuer un chaînage de fonctions de service, le dispositif (102, 600) comprenant un processeur (104, 510, 610) configuré pour mettre en œuvre toutes les étapes du procédé selon l'une quelconque des revendications 1 à 3.

5. Support de stockage non transitoire lisible par machine (106, 520, 620) comprenant des instructions qui, lorsqu'elles sont exécutées par un processeur (104, 510, 610), amènent le processeur (104, 510, 610) à mettre en œuvre toutes les étapes du procédé selon l'une quelconque des revendications 1 à 3.
